# NOUVEAU FASCICULE DE BREVET EUROPEEN

(11) **EP 1 547 005 B2**
(45) Date de publication et mention de la décision concernant l'opposition: **02.10.2019**
(45) Mention de la délivrance du brevet: 04.05.2016
(21) Numéro de dépôt: 03775452.0
(22) Date de dépôt: 29.09.2003
(51) Int. Cl.: G06K 19/07

(54) **CARTE À MICROCIRCUIT DONT LES PERFORMANCES PEUVENT ÊTRE MODIFIÉES APRÈS PERSONNALISATION**
CHIPKARTE, DEREN FUNKTION NACH DER PERSONALISIERUNG VERÄNDERT WERDEN KANN
MICROCIRCUIT CARD WHEREOF THE PERFORMANCES CAN BE MODIFIED AFTER CUSTOMIZATION

(30) Priorité: 04.10.2002 FR 0212340
(43) Date de publication de la demande: 29.06.2005
(73) Titulaire: IDEMIA France, 92400 Courbevoie (FR)
(72) Inventeur: JAYET, Stéphane, F-69330 Meyzieu (FR); HUOT, Jean-Claude, F-76000 Rouen (FR)
(74) Mandataire: Santarelli
(86) Numéro de dépôt international: PCT/FR2003/002854
(87) Numéro de publication internationale: WO 2004/032042

(56) Documents cités:
- EP-A- 0 479 617
- EP-A- 1 143 688
- EP-A- 1 223 565
- WO-A1-00/25278
- US-B1- 6 273 335
- RANKL; EFFING: "Handbuch der Chipkarten" , CARL HANSER VERLAG , MÜNCHEN; WIEN XP002243893 ISBN: 3-446-21115-2 page 206-211 page 234-241, alinéa 5.6.5 page 107
- RANKL; EFFING: "Handbuch der Chipkarten", 12 January 2007 (2007-01-12), CARL HANSER VERLAG, MÜNCHEN; WIEN, XP002243893, pages 299-300-607-609,
- "Digital cellular telecommunications system (Phase 2+); Security mechanisms for SIM application toolkit (=3GPP TS 03.48 V 8.8.0 R 1999)"; "2001-12" In: "ETSI TS 101 181 V8.8.0", pages 1-6-10,
- "Smart cards; Secured packet structure for UICC based applications (Release 6)"; "2002-04" In: "ETSI TS 102 225 V6.0.0",
- "Smart cards; UICC-Terminal Interface; Physical and logical characteristics (Release 8)" In: "ETSI TS 102 221 V8.2.0.", page 171,
- "3rd Generation Partnership Project (Release 1999)"; "2000-07" In: "ETSI TS 31.101 V3.2.0", pages 2-15-75,86,
- "Information technology- Identification cards -Integrated circuit(s) card with contacts"; "4" In: "ISO/IEC 7816-4", 1 September 1995 (1995-09-01) pages 1-4-17,27,
- "Smart cards; Remote APDU Structure for UICC based Applications (Release 6)"; "2002-04" In: "ETSI TS 102 226 V6.0.0", pages 5-8,

## Description

La présente invention concerne une carte à microcircuit dont les performances peuvent être modifiées après une étape de personnalisation de la carte, et un procédé de configuration d'une telle carte.

Dans la suite de ce document, le terme *"personnalisation"* (ou individualisation) sera compris comme étant celui utilisé couramment par l'homme du métier dans l'industrie des cartes à microcircuit, ou tel que défini par W.Rankl et W.Effing dans le document "Smart Card Handbook, Second Edition, Ed. John Wiley & Sons, Ltd" de la façon suivante :
*"Le terme personnalisation, dans son sens le plus large, signifie que les données spécifiques à une carte ou* à *une personne sont entrées dans la carte. Ces données peuvent par exemple être un nom, une adresse, mais aussi des clefs associées à la carte. La seule chose qui importe est que ces données soient spécifiques à cette carte. "*

Certaines opérations peuvent être effectuées sur les cartes à microcircuits après l'étape de personnalisation. Par exemple, le brevet américain US 6,273,335 décrit une méthode et un système pour bloquer ou débloquer une application dans une carte à microcircuit utilisant un mécanisme d'authentification automatique basé sur la comparaison de numéros PIN et de mots de passe.

L'invention trouve une application privilégiée, mais non limitative, dans le domaine des cartes à microcircuit de télécommunication mobile telles que les cartes SIM conformes à la norme GSM ou des cartes conformes à des normes similaires telles que les normes CDMA, TDMA ou UMTS. Dans ce contexte, l'invention permet la modification des performances d'une carte de télécommunication mobile personnalisée et déjà attribuée à un utilisateur abonné à un service de téléphonie mobile.

La modification de la fréquence d'horloge d'une carte à microcircuit est déjà connue de l'homme du métier lorsqu'elle s'effectue avant l'étape de personnalisation de la carte.

Un tel procédé est en particulier utilisé pendant les phases de développement d'une carte à microcircuit, phases au cours desquelles les cartes sont testées avec différentes fréquences d'horloge, la fréquence d'horloge de la carte étant ensuite figée avant la fin de la personnalisation.

Néanmoins, selon l'art antérieur, bien que des applications puissent être installées après la personnalisation de la carte, comme décrit, par exemple, dans la demande de brevet WO 00/25278, la modification des performances de la carte ne peut se faire après la personnalisation de la carte.

Le document ETSI TS 102 226 V6.0.0, « Smartcards; Remote APDU Structure for UICC based Applications (Release 6) » décrit la gestion distante de fichiers et d'applications sur une carte.

Il serait pourtant souhaitable de pouvoir modifier les performances d'une carte à microcircuit après personnalisation, notamment après sa commercialisation, ou plus généralement après qu'elle a été attribuée à un utilisateur.

A cet effet, l'invention concerne une carte à microcircuit telle que définie dans la revendication 1.

Corrélativement, l'invention vise, selon un deuxième aspect, un procédé de configuration d'une carte à microcircuit tel que défini dans la revendication 11.

Dans le contexte de la présente invention, une performance d'une carte à microcircuit pouvant être modifiée par un procédé de configuration conformément à la présente invention doit être comprise comme étant toute caractéristique matérielle ou logicielle préexistant dans la carte et non accessible après personnalisation.

L'invention permet ainsi d'améliorer ou de dégrader une performance d'une carte à microcircuit par l'envoi de la commande précitée après personnalisation, la carte étant déjà attribuée à un utilisateur. Sans la présente invention en revanche, un utilisateur souhaitant utiliser une carte avec réception de la commande, bénéficier de la totalité des 64 kilo-octets de la mémoire physique sans avoir à changer de carte.

Dans un mode préféré de réalisation, ces moyens d'authentification comportent des moyens cryptographiques permettant de vérifier si la commande a été cryptée avec une clef d'authentification prédéterminée.

Ces moyens de vérification peuvent utiliser une fonction de hachage selon un algorithme du type MD4, MD5 ou SHA-1.

Ainsi, selon cette caractéristique avantageuse, les modifications de performance de la carte nécessitent la connaissance de la clef d'authentification, cette clef pouvant être gardée secrète par un opérateur, le fabricant de la carte ou tout tiers qui se réserve ainsi la possibilité de modifier les performances de la carte.

Dans une variante de réalisation, la clef d'authentification précitée est associée à la modification d'une performance prédéterminée d'une carte prédéterminée.

Selon une autre caractéristique, les moyens de modification sont adaptés à déterminer quelle performance de la carte doit être modifiée en fonction d'un ordre prédéterminé reçu dans la commande.

Cette caractéristique permet, selon l'ordre prédéterminé reçu dans la commande, de modifier une ou plusieurs caractéristiques de la carte.

Selon un mode de réalisation particulièrement avantageux, les moyens de réception sont adaptés à recevoir la commande selon le protocole SMS ou similaire tel que le protocole MMS (multimedia service).

Ce mode de réalisation permet ainsi la modification d'au moins une performance de la carte à travers un réseau de télécommunication mobile.

Bien entendu, dans d'autres modes de réalisation, la commande peut être reçue par les moyens de réception à travers un réseau filaire ou localement.

Selon un mode de réalisation préféré de la carte selon l'invention, les moyens de modification sont adaptés à modifier la taille d'une zone utilisable d'une mémoire physique de la carte.

Cette caractéristique permet ainsi d'augmenter les capacités de mémorisation de la carte, par exemple pour permettre le téléchargement de nouvelles applications dans la carte.

Dans une variante préférée de ce mode de réalisation, la modification de la taille de la zone utilisable de la mémoire physique est effectuée en créant ou en détruisant au moins un fichier spécifique compris dans la mémoire physique, ou en modifiant la taille d'au moins un fichier spécifique compris dans la mémoire physique.

Ce fichier peut être un fichier spécifiquement créé pour occuper un espace de la mémoire physique ou un fichier de données utilisé par une application de la carte à microcircuit.

Dans un autre mode de réalisation préféré, les moyens de modification d'au moins une performance sont adaptés à modifier, de façon réversible ou non une fréquence d'horloge de la carte.

Selon cette caractéristique particulière, on peut accélérer la vitesse de calcul d'un processeur ou d'un composant cryptographique de la carte, ce qui permet de réaliser des traitements plus complexes sur des données numériques reçues par la carte à microcircuit.

Dans un autre mode de réalisation, les moyens de modification d'au moins une performance sont adaptés à permettre ou empêcher, de façon réversible ou non, l'utilisation d'au moins une fonction logicielle de la carte.

Cette caractéristique particulière permet ainsi de valider des applications logicielles prévues initialement sur la carte mais invalidées avant la fin de sa personnalisation.

Une telle fonction logicielle peut par exemple être une fonction cryptographique telle qu'une fonction de contrôle d'une signature de données numériques.

De la même façon, dans un autre mode de réalisation, les moyens de modification de performance de la carte sont adaptés à permettre ou empêcher, de façon réversible ou non, l'utilisation de tout ou partie d'un circuit électronique de la carte, ce circuit électronique pouvant par exemple être une unité cryptographique.

Les traitements cryptographiques qui étaient réalisés par logiciel peuvent ainsi avantageusement être accélérés par l'utilisation de cette unité cryptographique.

Dans un mode préféré de réalisation, la carte à microcircuit selon l'invention comporte en outre des moyens de synchronisation adaptés à vérifier l'unicité de la commande.

Cette caractéristique particulière permet avantageusement d'éviter une utilisation malhonnête de la carte à microcircuit en empêchant qu'une commande déjà reçue et copiée frauduleusement ne soit prise en compte une deuxième fois.

Les avantages et caractéristiques particulières propres au procédé de configuration selon l'invention étant similaires à ceux exposés ci-dessus concernant la carte à microcircuit conforme à l'invention, ils ne seront pas rappelés ici.

D'autres aspects et avantages de la présente invention apparaîtront plus clairement à la lecture des descriptions d'un mode particulier de réalisation qui va suivre cette description étant donnée à titre d'exemple non limitatif est faite en référence aux dessins annexés sur lesquels :
- la figure 1 représente de façon schématique l'architecture d'une carte à microcircuit conforme à l'invention ;
- la figure 2 représente une commande conforme à la présente invention, dans un mode préféré de réalisation ; et
- la figure 3 représente, sous forme d'organigramme, les principales étapes d'un procédé de configuration conforme à l'invention, dans un mode préféré de réalisation.

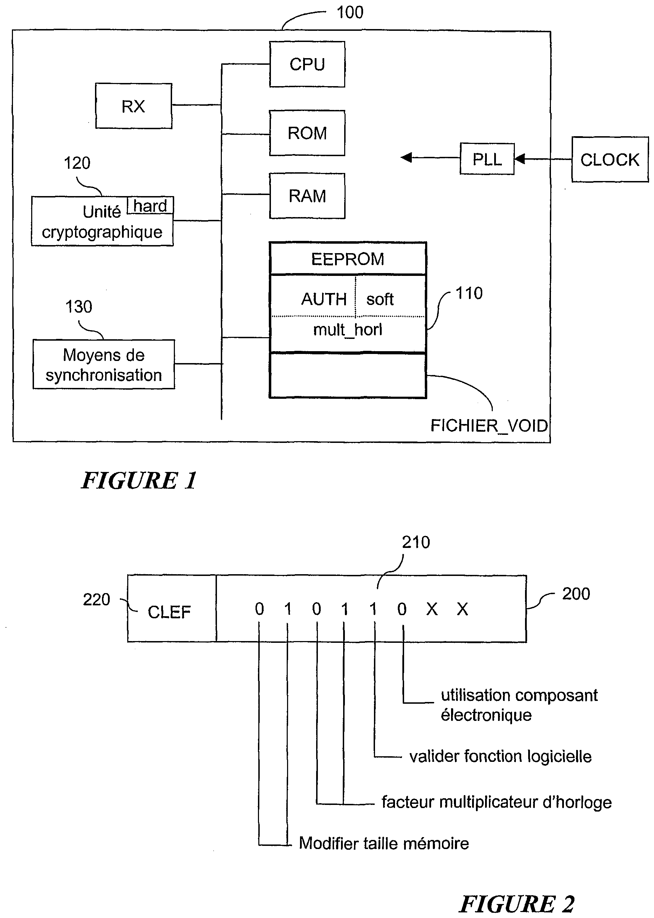

La **figure 1** représente de façon schématique l'architecture d'une carte à microcircuit 100 conforme à l'invention.

La carte à microcircuit 100 comporte principalement un processeur CPU associé de façon classique à un certain nombre de mémoires de type RAM, ROM et EEPROM.

La mémoire ROM comporte en particulier les instructions d'un programme informatique adapté à mettre en oeuvre un procédé de configuration conforme à la présente invention et dont les principales étapes seront décrites ultérieurement en référence à la figure 3.

De même, la mémoire vive RAM comporte des registres nécessaires à l'exécution de ce programme.

La carte à microcircuit 100 comporte également une mémoire physique, par exemple une mémoire de type EEPROM, dont la taille d'une zone utilisable 110 peut être modifiée après personnalisation.

La carte à microcircuit 100 comporte également un circuit électronique 120, constitué dans le mode de réalisation décrit ici par une unité cryptographique.

De façon connue, la carte à microcircuit 100 reçoit également un signal d'une horloge CLOCK externe à la carte, ce signal d'horloge étant fourni aux différents composants de la carte.

Dans le mode de réalisation particulier décrit ici, la carte à microcircuit 100 comporte un composant de type PLL (Phase Lock Looping en anglais) connu de l'homme du métier et permettant de dériver des signaux à différentes fréquences d'horloge, à partir du signal de l'horloge externe CLOCK.

Plus précisément, dans le mode de réalisation décrit ici, la zone utilisable 110 de la mémoire EEPROM comporte un registre mult_horl pour mémoriser un facteur multiplicateur appliqué à la fréquence du signal de l'horloge externe CLOCK.

A la mise sous tension de la carte à microcircuit, le processeur CPU lit ce registre mult_horl et programme le composant PLL avec la valeur contenue dans ce registre, le signal d'horloge en sortie du composant PLL étant ensuite appliqué à certains composants de la carte.

Dans le mode de réalisation décrit ici, le composant PLL permet ainsi de modifier la vitesse de calcul du processeur CPU et de l'unité cryptographique 120.

La carte à microcircuit 100 selon l'invention comporte des moyens de réception RX d'une commande 200 qui va maintenant être décrite, dans un mode préféré de réalisation, en référence à la **figure 2**.

La commande 200 comporte un champ 210 comportant un ordre prédéterminé dont l'analyse permet de déterminer quelles sont les performances de la carte 100 qui doivent être modifiées.

Dans l'exemple de réalisation décrit ici, les performances de la carte à microcircuit 100 pouvant être modifiées après personnalisation sont, la taille de la zone utilisable 110 de la mémoire physique EEPROM, la fréquence du signal d'horloge, une fonction logicielle f mise en oeuvre par le processeur CPU et le circuit électronique 120.

Dans le mode de réalisation préféré décrit ici, l'ordre 210 est constitué par un octet dont :
- le premier bit (bit1) et le deuxième bit (bit2) sont représentatifs d'un ordre de création ou de destruction d'une zone utilisable 110, ou d'un ordre de modification de la taille de la zone utilisable 110 de la mémoire physique EEPROM de la carte à microcircuit 100 ;
- le troisième (bit3) et le quatrième bit (bit4) constituent un facteur multiplicateur de la fréquence du signal d'horloge fourni par l'horloge externe CLOCK ;
- le cinquième bit (bit5) est représentatif d'un ordre d'utilisation ou de non utilisation d'une fonction logicielle f de la carte ;
- le sixième bit (bit6) est représentatif d'un ordre d'utilisation ou de non utilisation du circuit électronique 120 ; et
- les septième et huitième bits sont non utilisés.

Dans le mode préféré de réalisation décrit ici, les moyens de réception RX sont adaptés à recevoir la commande 200 selon le protocole SMS, par exemple au moyen de la commande ENVELOPE de ce protocole, et à mémoriser cette commande 200 dans une zone de la mémoire vive RAM.

La carte à microcircuit 100 comporte également des moyens d'authentification d'un émetteur de la commande 200.

Dans un mode préféré de réalisation, les moyens d'authentification comportent des moyens cryptographiques permettant de vérifier si la commande 200 a été cryptée avec une clef d'authentification AUTH prédéterminée, la clef d'authentification AUTH étant mémorisée dans une partie AUTH de la zone utilisable 110 de la mémoire EEPROM au moment de la personnalisation de la carte.

Ces moyens cryptographiques peuvent être constitués par un programme informatique exécuté par le processeur CPU, ce programme informatique comportant des instructions de mise en oeuvre d'un algorithme de décryptage à clef publique tel que l'algorithme RSA connu de l'homme du métier.

Dans le mode préféré de réalisation décrit ici, la carte à microcircuit 100 comporte en outre des moyens de synchronisation 130 adaptés à vérifier l'unicité de la commande 200, de façon à éviter qu'une commande 200 déjà reçue et copiée frauduleusement ne soit prise en compte une deuxième fois de façon non autorisée.

Les moyens de synchronisation 130 peuvent en particulier être constitués par un circuit électronique mettant en oeuvre le test E35 de vérification décrit ultérieurement en référence à la figure 3.

Selon un mode préféré de réalisation, le processeur CPU détermine, à partir de la commande 200, la ou les performances de la carte à microcircuit 100 qui doivent être modifiées.

En particulier, si le couplet (bit1, bit2) constitué par le premier bit bit1 et le deuxième bit bit2 de l'ordre 210 est égal à (1,1), cela signifie que la taille de la zone utilisable 110 de la mémoire physique EEPROM doit, si possible être augmentée.

En pratique, et dans le mode de réalisation préféré décrit ici, la carte à microcircuit 100 comporte, avant personnalisation, un fichier informatique FICHIER_VOID dans la mémoire physique EEPROM de telle sorte que lorsque le couplet (bit1, bit2) est égal à (1, 1), le processeur CPU détruit ce fichier FICHIER_VOID libérant ainsi une partie de la mémoire physique EEPROM.

En variante, lorsque le couplet (bit1, bit2) est égal à (1,1), la taille de la zone utilisable de la mémoire physique EEPROM est (si possible) augmentée en diminuant la taille du fichier FICHIER_VOID de façon prédéterminée, par exemple de 16 kilo-octets.

De même, dans le mode préféré de réalisation décrit ici, lorsque le couplet (bit1, bit2) est égal à (0,0), cela signifie que la taille de la zone utilisable 110 de la mémoire physique EEPROM doit si possible être diminuée, cette opération étant réalisée en augmentant (si possible) la taille du fichier FICHIER_VOID de façon prédéterminée, par exemple de 16 kilo-octets.

En variante, lorsque le couplet (bit1, bit2) est égal à (0,0), cela signifie qu'un fichier FICHIER_VOID doit être créé, si possible, à une adresse et avec une taille prédéterminées dans la mémoire physique EEPROM.

Dans le mode de réalisation décrit ici, la réception d'une commande 200 dont le couplet (bit1, bit2) est égal à (1,0) ou (0,1) est sans effet.

Conformément à la norme ISO7816, la modification des caractéristiques (création, destruction, changement de taille) du fichier FICHIER_VOID peut nécessiter une clef CLEF spécifique 220 reçue dans la commande 200, tel que représenté à la figure 2.

Dans un autre mode préféré de réalisation, plusieurs fichiers du même type peuvent être prévus avant personnalisation de la carte, ce qui permet d'augmenter, progressivement, par destruction de ces fichiers la taille de la zone utilisable de la mémoire physique EEPROM.

D'autre part, lorsque la carte à microcircuit 100 reçoit l'ordre 210, le processeur CPU obtient, par lecture du troisième bit3 et quatrième bit4 bits de cet ordre 210, un facteur multiplicateur d'horloge.

Dans le mode préféré de réalisation décrit ici, ce facteur multiplicateur d'horloge est égal respectivement à 1, 2 et 3 pour les valeurs des couplets (bit3, bit4) respectivement égales à (0,1), (1,0), (1,1).

Dans le mode de réalisation particulier décrit ici, ce facteur multiplicateur est mémorisé dans le registre mult_horl de la zone utilisable 110 de la mémoire EEPROM, ce registre étant lu par le processeur CPU à la mise sous tension pour paramétrer le composant PLL.

Dans le mode de réalisation décrit ici, la carte à microcircuit comporte des moyens de modification adaptés à permettre ou à empêcher l'utilisation d'une fonction logicielle f de la carte.

En pratique, la mémoire morte ROM comporte un programme informatique pouvant invoquer cette fonction logicielle f lorsqu'un registre soft de la zone utilisable 110 de la mémoire non volatile EEPROM contient la valeur 1.

Sur réception de la commande 200, le processeur CPU lit, écrit dans le registre soft la valeur du cinquième bit bit5 de l'ordre prédéterminé reçu dans la commande 200.

Dans l'exemple décrit ici, la fonction logicielle est une fonction cryptographique ou une fonction de contrôle d'une signature de données numériques reçues par les moyens de réception RX.

La carte à microcircuit 100 comporte aussi des moyens de modification adaptés à permettre ou empêcher l'utilisation de tout ou partie d'un circuit électronique 120 de la carte.

Dans le mode de réalisation décrit ici, ce circuit électronique 120 comporte une unité cryptographique.

En pratique, l'utilisation de ce circuit électronique 120 est possible après écriture de la valeur 1 dans un registre hard de ce composant, la valeur de ce registre étant modifiée par le processeur CPU avec le contenu du sixième bit bit6 de l'ordre prédéterminé.

Dans l'exemple décrit ici, la modification de la fréquence d'horloge, l'autorisation ou l'empêchement d'utiliser la fonction logicielle ou le composant électronique sont des opérations réversibles. Dans un autre mode de réalisation, l'une au moins de ces opérations pourrait ne pas être réversible.

Nous allons maintenant décrire en référence à la figure 3, les principales étapes d'un procédé de configuration conforme à l'invention dans un mode préféré de réalisation.

Le procédé de configuration comporte une première étape E10 de personnalisation. Cette étape est connue de l'homme du métier, et ne sera décrite en détail ici.

Quoi qu'il en soit, cette étape de personnalisation consiste à écrire dans une mémoire de la carte, par exemple dans l'EEPROM des données spécifiques à cette carte ou à un utilisateur de cette carte.

Dans l'exemple décrit ici, cette étape de personnalisation comprend en particulier l'écriture dans une mémoire EEPROM de la carte à microcircuit 100 la valeur de la clef d'authentification AUTH.

Cette étape de personnalisation comprend aussi la création du fichier FICHIER_VOID et de sa clé 220 dans la mémoire EEPROM.

L'étape E10 est suivie par une étape E20 de réception de la commande 200 décrite précédemment en référence à la figure 2.

L'étape E20 est suivie par une étape de vérification E30 au cours de laquelle le processeur CPU authentifie un émetteur de la commande 200. Cette étape d'authentification s'effectue, dans le mode de réalisation décrit ici, en vérifiant si la commande 200 a été cryptée avec une clef d'authentification AUTH prédéterminée, la clef d'authentification AUTH étant mémorisée dans un registre de la mémoire EEPROM au moment de la personnalisation de la carte.

Si tel n'est pas le cas, le résultat du test E30 est négatif. Ce test est alors suivi par l'étape E20 de réception d'une commande déjà décrite.

En revanche, si l'émetteur de la commande 200 est authentifié comme autorisé à émettre la commande 200, le résultat du test E30 est positif.

Ce test est alors suivi par un test E35 au cours duquel on vérifie l'unicité de la commande 200. Ce test E35 de vérification permet d'éviter qu'une commande 200 déjà reçue et copiée frauduleusement ne soit prise en compte une deuxième fois de façon non autorisée.

De façon connue, ce test E35 de vérification peut être mis en oeuvre en incorporant un numéro de message dans chaque commande 200, ce numéro étant incrémenté pour chaque commande, et en comparant ce numéro reçu dans une commande 200 particulière, avec la valeur du numéro reçu dans la commande 200 précédente.

Si la commande 200 a déjà été reçue, le résultat du test de vérification E35 est négatif. Ce test est alors suivi par l'étape E20 de réception d'une commande 200 déjà décrite.

En revanche, si la commande 200 est reçue pour la première fois, le résultat du test de vérification E35 est positif.

Ce test est alors suivi par une étape E40 au cours de laquelle on modifie, la taille de la zone utilisable 110 de la mémoire physique EEPROM en fonction des valeurs des premier et deuxième bits (bit1, bit2) de l'ordre prédéterminé 210 reçu dans la commande 200.

Selon les différentes variantes de réalisations décrites précédemment en référence à la figure 1, cette étape E40 est réalisée, en créant, en détruisant le fichier FICHIER_VOID contenu dans la mémoire physique EEPROM, ou en modifiant la taille de ce fichier FICHIER_VOID.

L'étape E40 de modification de la taille de la zone utilisable 110 de la mémoire physique EEPROM est suivie par une étape E60 au cours de laquelle on mémorise le facteur multiplicateur de la fréquence de l'horloge externe CLOCK dans le registre mult_horl de la zone utilisable 110 de la mémoire EEPROM, ce registre étant lu par le processeur CPU à la mise sous tension pour paramétrer le composant PLL, ce qui a pour effet de modifier, de façon réversible la fréquence d'horloge de la carte.

Comme décrit précédemment, le facteur de multiplicateur de cette fréquence d'horloge est déterminé par la valeur du troisième bit bit3 et du quatrième bit bit4 de l'ordre 210 prédéterminé.

L'étape E60 de modification de la fréquence d'horloge est suivie par une étape E70 au cours de laquelle le processeur CPU écrit dans le registre soft de la mémoire non volatile EEPROM la valeur du cinquième bit bit5 de l'ordre 210.

Comme décrit précédemment, lorsque ce registre soft mémorise la valeur 1, une fonction logicielle f par exemple une fonction cryptographique telle qu'une fonction de contrôle d'une signature de données numériques est rendue accessible en ce qu'elle peut être invoquée par un programme informatique mémorisé dans la mémoire ROM ou la mémoire EEPROM.

L'étape E70 est suivie par une étape E80 au cours de laquelle le processeur CPU mémorise dans le registre hard du circuit électronique 120 la valeur du sixième bit bit6 de l'ordre prédéterminé.

Lorsque ce registre hard mémorise la valeur 1, l'utilisation de ce circuit électronique 120 est autorisé. Dans le mode de réalisation préféré décrit ici, ce circuit électronique 120 est une unité cryptographique.

L'étape E80 est suivie par l'étape E20 de réception d'une commande déjà décrite.

## Revendications

1. Carte à microcircuit (100) comportant des moyens (RX) de réception d'une commande (200) et des moyens de modification d'au moins une performance de ladite carte sur réception de ladite commande, les moyens de modification pouvant être mis en oeuvre après une étape (E10) de personnalisation de ladite carte, et comportant également des moyens cryptographiques pour authentifier un émetteur de ladite commande, ladite au moins une performance étant au moins une caractéristique matérielle ou logicielle préexistant dans ladite carte, lesdits moyens de réception (RX) étant adaptés à recevoir ladite commande (200) selon un protocole de type SMS.

2. Carte à microcircuit selon la revendication 1, **caractérisée en ce que** lesdits moyens cryptographiques d'authentification comprennent une clé d'authentification.

3. Carte à microcircuit selon la revendication 1 ou 2, **caractérisée en ce que** les moyens de modification sont adaptés à déterminer ladite au moins une performance en fonction d'un ordre prédéterminé (210) reçu dans ladite commande (200).

4. Carte à microcircuit selon l'une quelconque des revendications 1 à 3, **caractérisée en ce que** lesdits moyens de modification d'au moins une performance sont adaptés à modifier la taille d'une zone utilisable (110) d'une mémoire physique (EEPROM) de ladite carte.

5. Carte à microcircuit selon la revendication 4, **caractérisée en ce que** ladite modification de la taille d'une zone utilisable (110) d'une mémoire physique (EEPROM) est effectuée en créant ou en détruisant au moins un fichier spécifique (FICHIER_VOID compris dans ladite mémoire physique, ou en modifiant la taille d'au moins un fichier spécifique (FICHIER_VOID) compris dans ladite mémoire physique.

6. Carte à microcircuit selon l'une quelconque des revendications 1 à 5, **caractérisée en ce que** lesdits moyens de modification d'au moins une performance sont adaptés à modifier, de façon réversible ou non, une fréquence d'horloge de ladite carte.

7. Carte à microcircuit selon l'une quelconque des revendications 1 à 6, **caractérisée en ce que** lesdits moyens de modification d'au moins une performance sont adaptés à permettre ou empêcher, de façon réversible ou non, l'utilisation d'au moins une fonction logicielle (f) de ladite carte.

8. Carte à microcircuit selon l'une quelconque des revendications 1 à 7, **caractérisée en ce que** lesdits moyens de modification d'au moins une performance sont adaptés à permettre ou empêcher, de façon réversible ou non l'utilisation de tout ou partie d'un circuit électronique (120) de ladite carte.

9. Carte à microcircuit selon la revendication 8, **caractérisée en ce que** ledit circuit électronique (120) est une unité cryptographique.

10. Carte à microcircuit selon l'une quelconque des revendications 1 à 9, **caractérisée en ce qu**elle comporte en outre des moyens de synchronisation (130) adaptés à vérifier l'unicité de ladite commande (200).

11. Procédé de configuration d'une carte à microcircuit (100) comportant les étapes successives suivantes :
- personnalisation (E10) de ladite carte ;
- réception (E20) d'une commande (200) ;
- authentification (E30) par cryptographie d'un émetteur de ladite commande (200) ; et
- modification (E40, E60, E70, E80) d'au moins une performance de la carte sur réception de ladite commande (200)
ladite au moins une performance étant au moins une caractéristique matérielle ou logicielle préexistant dans ladite carte, ladite étape (E20) de réception d'une commande (200) étant conforme à un protocole de type SMS.

12. Procédé de configuration selon la revendication 11, **caractérisé en ce que,** au cours de ladite étape de modification (E40, E60, E70, E80), on détermine ladite au moins une performance en fonction d'un ordre prédéterminé (210) reçu dans ladite commande (200).

13. Procédé de configuration selon l'une quelconque des revendications 11 à 12, **caractérisé en ce que**, au cours de ladite étape (F40) de modification d'au moins une performance, on modifie la taille d'une zone utilisable (110) d'une mémoire physique (EEPROM) de ladite carte.

14. Procédé de configuration selon la revendication 13, **caractérisé en ce que** au cours de ladite modification de la taille d'une zone utilisable (110) d'une mémoire physique (EEPROM), on crée ou on détruit au moins un fichier spécifique (FICHIER_VOID) compris dans ladite mémoire physique ou on modifie la taille d'au moins un fichier spécifique (FICHIER_VOID) compris dans ladite mémoire physique.

15. Procédé de configuration selon l'une quelconque des revendications 11 à 14, **caractérisé en ce que,** au cours de ladite étape (E60) de modification d'au moins une performance, on modifie, de façon réversible ou non, une fréquence d'horloge de ladite carte.

16. Procédé de configuration selon l'une quelconque des revendications 11 à 15, **caractérisé en ce que,** au cours de ladite étape (E70) de modification d'au moins une performance, on permet ou en empêche, de façon réversible ou non, l'utilisation d'au moins une fonction logicielle (f) de ladite carte.

17. Procédé de configuration selon l'une quelconque des revendications 1.1 à 16, **caractérisé en ce que,** au cours de ladite étape (E80) de modification d'au moins une performance, on permet ou en empêche, de façon réversible ou non, l'utilisation de tout ou partie d'un circuit électronique (120) de ladite carte.

18. Procédé de configuration selon la revendication 17, **caractérisé en ce que** ledit composant électronique (120) est une unité cryptographique.

19. Procédé de configuration selon l'une quelconque des revendications 11 à 18, **caractérisé en ce qu'**il comporte, préalablement à ladite étape (E40) de modification d'au moins une performance, une étape (E35) de vérification de l'unicité de ladite commande (200).

## Patentansprüche

1. Chipkarte (100), die Mittel (RX) zum Empfangen eines Befehls (200) und Mittel zum Verändern von mindestens einer Funktion der Karte beim Empfangen des Befehls aufweist, wobei die Mittel zum Verändern nach einem Schritt (E10) der Personalisierung der Karte eingesetzt werden können, und auch kryptographische Mittel aufweist, um einen Sender des Befehls zu authentifizieren, wobei die mindestens eine Funktion mindestens ein bereits vorhandenes Hardware- oder Softwaremerkmal in der Karte ist, wobei die Mittel zum Empfangen (RX) geeignet sind, den Befehl (200) nach einem SMS-Protokoll zu empfangen.

2. Chipkarte nach Anspruch 1, **dadurch gekennzeichnet, dass** die kryptographischen Mittel zum Authentifizieren einen Authentifizierungsschlüssel aufweisen.

3. Chipkarte nach Anspruch 1 oder 2, **dadurch gekennzeichnet, dass** die Mittel zum Verändern geeignet sind, die mindestens eine Funktion in Abhängigkeit von einer vorbestimmten Reihenfolge (210) zu bestimmen, die in dem Befehl (200) empfangen wird.

4. Chipkarte nach einem der Ansprüche 1 bis 3, **dadurch gekennzeichnet, dass** die Mittel zum Verändern von mindestens einer Funktion geeignet sind, die Größe eines nutzbaren Bereichs (110) eines physischen Speichers (EEPROM) der Karte zu verändern.

5. Chipkarte nach Anspruch 4, **dadurch gekennzeichnet, dass** das Verändern der Größe eines nutzbaren Bereichs (110) eines physischen Speichers (EEPROM) durchgeführt wird, indem mindestens eine spezifische Datei (FICHIER_VOID) erstellt oder zerstört wird, die in dem physischen Speicher enthalten ist, oder indem die Größe von mindestens einer spezifischen Datei (FICHIER_VOID), die in dem physischen Speicher enthalten ist, verändert wird.

6. Chipkarte nach einem der Ansprüche 1 bis 5, **dadurch gekennzeichnet, dass** die Mittel zum Verändern von mindestens einer Funktion geeignet sind, eine Taktfrequenz der Karte auf reversible oder nicht reversible Weise zu verändern.

7. Chipkarte nach einem der Ansprüche 1 bis 6, **dadurch gekennzeichnet, dass** die Mittel zum Verändern von mindestens einer Funktion geeignet sind, die Verwendung von mindestens einer Softwarefunktion (f) der Karte auf reversible oder nicht reversible Weise zu ermöglichen oder zu verhindern.

8. Chipkarte nach einem der Ansprüche 1 bis 7, **dadurch gekennzeichnet, dass** die Mittel zum Verändern von mindestens einer Funktion geeignet sind, die Verwendung von dem ganzen oder einem Teil eines elektronischen Schaltkreises (120) der Karte auf reversible oder nicht reversible Weise zu ermöglichen oder zu verhindern.

9. Chipkarte nach Anspruch 8, **dadurch gekennzeichnet, dass** der elektronische Schaltkreis (120) eine kryptographische Einheit ist.

10. Chipkarte nach einem der Ansprüche 1 bis 9, **dadurch gekennzeichnet, dass** sie ferner Synchronisationsmittel (130) aufweist, die geeignet sind, die Eindeutigkeit des Befehls (200) zu überprüfen.

11. Verfahren zur Konfiguration einer Chipkarte (100), das die folgenden aufeinanderfolgenden Schritte aufweist:
- Personalisieren (E10) der Karte;
- Empfangen (E20) eines Befehls (200);
- Authentifizieren (E30) durch Kryptographie eines Senders des Befehls (200); und
- Verändern (E40, E60, E70, E80) von mindestens einer Funktion der Karte beim Empfangen des Befehls (200),
wobei die mindestens eine Funktion mindestens ein bereits vorhandenes Hardware- oder Softwaremerkmal in der Karte ist, wobei der Schritt (E20) des Empfangens eines Befehls (200) mit einem SMS-Protokoll konform ist.

12. Verfahren zur Konfiguration nach Anspruch 11, **dadurch gekennzeichnet, dass** während des Schrittes des Veränderns (E40, E60, E70, E80) die mindestens eine Funktion in Abhängigkeit von einer vorbestimmten Reihenfolge (210) bestimmt wird, die in dem Befehl (200) empfangen wird.

13. Verfahren zur Konfiguration nach einem der Ansprüche 11 bis 12, **dadurch gekennzeichnet, dass** während des Schrittes (F40) des Veränderns von mindestens einer Funktion die Größe eines nutzbaren Bereichs (110) eines physischen Speichers (EEPROM) der Karte verändert wird.

14. Verfahren zur Konfiguration nach Anspruch 13, **dadurch gekennzeichnet, dass** während des Veränderns der Größe eines nutzbaren Bereichs (110) eines physischen Speichers (EEPROM) mindestens eine spezifische Datei (FICHIER_VOID) erstellt oder zerstört wird, die in dem physischen Speicher enthalten ist, oder die Größe von mindestens einer spezifischen Datei (FICHIER_VOID), die in dem physischen Speicher enthalten ist, verändert wird.

15. Verfahren zur Konfiguration nach einem der Ansprüche 11 bis 14, **dadurch gekennzeichnet, dass** während des Schrittes (E60) des Veränderns von mindestens einer Funktion eine Taktfrequenz der Karte auf reversible oder nicht reversible Weise verändert wird.

16. Verfahren zur Konfiguration nach einem der Ansprüche 11 bis 15, **dadurch gekennzeichnet, dass** während des Schrittes (E70) des Veränderns von mindestens einer Funktion die Verwendung von mindestens einer Softwarefunktion (f) der Karte auf reversible oder nicht reversible Weise ermöglicht oder verhindert wird.

17. Verfahren zur Konfiguration nach einem der Ansprüche 11 bis 16, **dadurch gekennzeichnet, dass** während des Schrittes (E80) des Veränderns von mindestens einer Funktion die Verwendung von dem ganzen oder einem Teil eines elektronischen Schaltkreises (120) der Karte auf reversible oder nicht reversible Weise ermöglicht oder verhindert wird.

18. Verfahren zur Konfiguration nach Anspruch 17, **dadurch gekennzeichnet, dass** das elektronische Bauelement (120) eine kryptographische Einheit ist.

19. Verfahren zur Konfiguration nach einem der Ansprüche 11 bis 18, **dadurch gekennzeichnet, dass** es vor dem Schritt (E40) des Veränderns von mindestens einer Funktion einen Schritt (E35) des Überprüfens der Eindeutigkeit des Befehls (200) aufweist.

## Claims

1. Microcircuit card (100) comprising means (RX) for receiving a command (200) and means for modification of at least one characteristic of the performance of said card on reception of said command, wherein the modification means can be used after a step (E10) of personalization of said card, and also comprise cryptographic means for authenticating a sender of said command, said at least one performance characteristic being at least one hardware or software characteristic pre-existing in said card, said reception means (RX) being adapted to receive said command (200) in accordance with an SMS-type protocol.

2. Microcircuit card according to Claim 1, **characterized in that** said cryptographic authentication means comprise an authentication key.

3. Microcircuit card according to Claim 1 or 2, **characterized in that** the modification means are adapted to determine said at least one performance characteristic as a function of a predetermined instruction (210) received in said command (200).

4. Microcircuit card according to any one of Claims 1 to 3, **characterized in that** said means for modification of at least one performance characteristic are adapted to modify the size of a usable area (110) of a physical memory (EEPROM) of said card.

5. Microcircuit card according to Claim 4, **characterized in that** said modification of the size of a usable area (110) of a physical memory (EEPROM) is effected by creating or destroying at least one specific file (VOID_FILE) comprised in said physical memory, or by modifying the size of at least one specific file (VOID_FILE) comprised in said physical memory.

6. Microcircuit card according to any one of Claims 1 to 5, **characterized in that** said means for modification of at least one performance characteristic are adapted to modify a clock frequency of said card, reversibly or not.

7. Microcircuit card according to any one of Claims 1 to 6, **characterized in that** said means for modification of at least one performance characteristic are adapted to allow or prevent the use of at least one software function (f) of said card, reversibly or not.

8. Microcircuit card according to any one of Claims 1 to 7, **characterized in that** said means for modification of at least one performance characteristic are adapted to allow or prevent the use of all or part of an electronic circuit (120) of said card, reversibly or not.

9. Microcircuit card according to Claim 8, **characterized in that** said electronic circuit (120) is a cryptographic unit.

10. Microcircuit card according to any one of Claims 1 to 9, **characterized in that** it further comprises synchronization means (130) adapted to verify that said command (200) is unique.

11. Method of configuring a microcircuit card (100) comprising the following successive steps:
personalizing (E10) said card;
receiving (E20) a command (200);
cryptographically authenticating (E30) a sender of said command (200); and
modifying (E40, E60, E70, E80) at least one characteristic of the performance of the card on reception of said command (200),
said at least one performance characteristic being at least one hardware or software characteristic pre-existing in said card, said step (E20) of receiving a command (200) being in accordance with an SMS-type protocol.

12. Configuration method according to Claim 11, **characterized in that**, during said modifying step (E40, E60, E70, E80), said at least one performance characteristic is determined as a function of a predetermined instruction (210) received in said command (200).

13. Configuration method according to any one of Claims 11 to 12, **characterized in that**, during said step (F40) of modifying at least one performance characteristic, the size of a usable area (110) of a physical memory (EEPROM) of said card is modified.

14. Configuration method according to Claim 13, **characterized in that**, during said modification of the size of a usable area (110) of a physical memory (EEPROM), at least one specific file (VOID_FILE) comprised in said physical memory is created or destroyed or the size of at least one specific file (VOID_FILE) comprised in said physical memory is modified.

15. Configuration method according to any one of Claims 11 to 14, **characterized in that**, during said step (E60) of modifying at least one performance characteristic, a clock frequency of said card is modified, reversibly or not.

16. Configuration method according to any one of Claims 11 to 15, **characterized in that**, during said step (E70) of modifying at least one performance characteristic, the use of at least one software function (f) of said card is allowed or prevented, reversibly or not.

17. Configuration method according to any one of Claims 11 to 16, **characterized in that**, during said step (E80) of modifying at least one performance characteristic, the use of all or part of an electronic circuit (120) of said card is allowed or prevented, reversibly or not.

18. Configuration method according to Claim 17, **characterized in that** said electronic circuit (120) is a cryptographic unit.

19. Configuration method according to any one of Claims 11 to 18, **characterized in that** it comprises, prior to said step (E40) of modifying at least one performance characteristic, a step (E35) of verifying that said command (200) is unique.
